# FASCICULE DE BREVET EUROPEEN

(11) **EP 3 403 878 B1**
(45) Date de publication et mention de la délivrance du brevet: **04.03.2020**
(21) Numéro de dépôt: 18167232.0
(22) Date de dépôt: 13.04.2018
(51) Int. Cl.: B60Q 1/04, F21S 45/50

(54) **ENSEMBLE DE PROJECTEUR DE VEHICULE SANS GLACE**
FAHRZEUGSCHEINWERFEREINHEIT OHNE SCHEIBE
VEHICLE HEADLIGHT ASSEMBLY WITH NO LENS

(30) Priorité: 19.05.2017 FR 1754492
(43) Date de publication de la demande: 21.11.2018
(73) Titulaire: PSA Automobiles SA, 78300 Poissy (FR)
(72) Inventeur: DESSI, BRUNO, 25260 ETOUVANS (FR)

(56) Documents cités:
- FR-A1- 2 277 302
- FR-A1- 3 026 823

## Description

La présente invention concerne de manière générale un projecteur de lumière monté sur un véhicule automobile.

Elle se rapporte plus particulièrement à un ensemble de projecteur de véhicule automobile dit également projecteur sans glace, c'est-à-dire un ensemble de projecteur dépourvu d'une glace de protection fermant habituellement un boitier contenant les éléments d'éclairage du projecteur afin de protéger lesdits éléments d'éclairages (ampoule, réflecteur, etc) contre les salissures, projection de corps étranger, eau, et toute agression issue de l'environnement extérieur au véhicule.

Le document EP1660350 divulgue un ensemble 10 de projecteur de véhicule tel qu'illustré à la figure 1, dépourvu de glace. Cet ensemble comporte un boitier 12 comportant une ouverture 28 orientée vers l'extérieur du véhicule (non représenté).

Le boitier 12 comporte un module d'éclairage 16 disposé à l'intérieur du boitier 12 et ressortant de l'ouverture 28 du boitier 12. Le module d'éclairage 16 est hermétiquement fermé par une lentille 18 qui est disposée à l'extérieure de l'ouverture 28.

L'ensemble de projecteur 10 comporte un masque de fermeture 26, qui ferme l'ouverture 28 en bridant le module 16 sur le boitier 12, tout en entourant le module d'éclairage 16 de manière étanche.

Un premier joint torique 30 est disposé entre la lentille 18 du module d'éclairage 16 qui ressort à l'extérieur du masque 26, et le masque 26 pour assurer l'étanchéité entre l'extérieur de l'ensemble de projecteur 10 et l'intérieur du boitier 12. Un deuxième joint torique, non référencé, est disposé à l'interface de fixation du masque 26 sur le boitier 12.

On connait également du document FR2277302A, un joint annulaire extérieur monté à chevauchement entre le boitier et la glace frontale du projecteur. Le montage de ce joint se fait par enfilage du joint par l'arrière du boitier.

Ces ensembles ne permettent pas de mouvements relatifs du module d'éclairage dans le boitier. Or de tels mouvements sont nécessaires pour pouvoir assurer le réglage du module à l'intérieur du boitier en site et en azimut ou pour remplir certaines prestations d'éclairage nécessitant au moins une liberté de mouvement du module à l'intérieur du boitier. Un but de la présente invention est de répondre aux inconvénients du document de l'art antérieur mentionné ci-dessus.

Le document FR3026823 divulgue un ensemble de projecteur de véhicule selon le préambule de la revendication 1.

Pour cela un premier aspect de l'invention concerne un ensemble de projecteur de véhicule comportant un boitier comportant une ouverture, ledit boitier comportant au moins un module d'éclairage disposé à l'intérieur du boitier, ledit module d'éclairage étant hermétiquement fermé par une lentille de projection disposée en regard de l'ouverture, ledit ensemble de projecteur comportant un masque de fermeture étanche fermant l'ouverture entre le boitier et le module d'éclairage.

Selon l'invention, le masque de fermeture comporte un corps rigide dans lequel est ménagé une ouverture traversée par le module et une membrane souple annulaire disposée à l'interface entre l'ouverture et le module d'éclairage ; ladite membrane assurant l'étanchéité entre le module et le masque tout en permettant la mobilité du module dans le boitier.

Selon l'invention, la membrane définit une lèvre annulaire d'étanchéité obtenue par déformation élastique de la membrane autour du module.

Selon une autre caractéristique, la membrane est une partie d'un joint d'étanchéité rapporté dans l'ouverture du masque.

Selon une variante, la membrane est réalisée à partir d'un surmoulage de matière plastique sur la partie rigide du masque.

Selon une autre variante, la membrane est réalisée à partir d'un moulage bi-matière du masque.

Selon une autre caractéristique, la forme, les dimensions de la membrane, le choix du matériau et de son élasticité, sont déterminées pour que la pression exercée par la membrane sur le contour extérieur du module assure l'étanchéité de l'intérieur du boitier tout en permettant une liberté de mouvement du module dans le boitier.

Un deuxième aspect de la présente invention concerne un véhicule automobile comportant au moins un ensemble de projecteur tel que décrit ci-dessus.

La mise en œuvre d'un masque muni de moyens d'étanchéité dans un ensemble de projecteur selon l'invention est simple et peu couteuse. Le masque est remarquable en ce qu'il autorise des mouvements entre le module et le boîtier.

D'autres caractéristiques et avantages de la présente invention apparaîtront plus clairement à la lecture de la description détaillée qui suit d'un mode de réalisation de l'invention donné à titre d'exemple nullement limitatif et illustré par le dessin annexés, dans lequel :
- la figure 1 représente une vue en coupe d'un ensemble de projecteur selon l'état de la technique déjà décrit ;
- la figure 2 représente par une vue schématique, en coupe, un mode de réalisation d'un ensemble de projecteur selon l'invention ; et
- la figure 3 représente une vue de détail de l'interface d'étanchéité entre le masque et un module d'éclairage de l'ensemble de projecteur selon l'invention.

Pour faciliter la compréhension des figures, ces dernières sont représentées dans un même référentiel tridimensionnel XYZ.

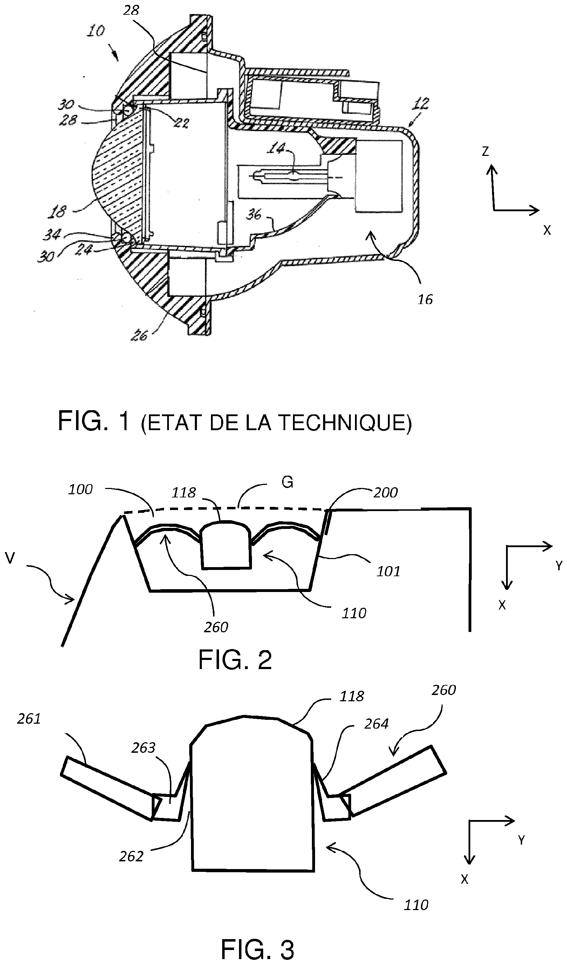

Les figures 2 et 3 représentent respectivement par des vues schématique, en coupe, un mode de réalisation d'un ensemble de projecteur selon l'invention ; la figure 3 est un agrandissement de l'interface entre le masque 260 et le module d'éclairage 110.

Le module d'éclairage 110 est par exemple le même que l'un de ceux décrits dans le document FR3015003.

Les mêmes références numériques sont reprises de ce document pour désigner les éléments similaires dans les figures 2 et 3 par commodité.

Le module d'éclairage 110 est équipé de moyens, non représentés sur les figures, mais qui peuvent être similaires à ceux du document FR3015003, permettant le réglage de l'orientation du faisceau lumineux émis par la lentille de projection 118.

Comme l'ensemble de projecteur représenté ne comprend pas de glace G (représentée fictivement par en trait interrompu, pour indiquer sa position si elle existait), le boitier 101 présente une ouverture 100 orientée vers l'avant du véhicule V et donc, les moyens de réglage mécanique du module 110, les faisceaux électriques et la connectique contenus dans le boitier 101 (non représentés), sont directement exposés aux agressions extérieures, comme des grains de sable, des gravillons, l'eau, ...

Le boitier 101 est intégré dans une cavité 200 ménagée dans la structure du véhicule V ou fait partie au moins partiellement de la structure du véhicule V.

Pour protéger les éléments exposés, un masque de fermeture 260 est agencé pour fermer l'ouverture 100 entre le boitier 101 et le module d'éclairage 110 de manière étanche.

Ce masque 260 est avantageusement conformé pour définir une pièce de style, participant à l'esthétisme de la face avant du véhicule V. Le masque est réalisé par exemple en PC (Polycarbonate) recouvert d'un vernis anti-UV (anti-Ultraviolets).

Pour permettre le réglage du module 110 ou d'autres prestations d'éclairage, il faut laisser au moins un mouvement de liberté possible entre le module d'éclairage 110 et le masque 260.

Ce mouvement ne doit pas compromettre l'étanchéité du masque 260.

A cet effet, le masque 260 comporte un corps rigide 261 et au moins une ouverture 262 ménagée dans le corps rigide 261 pour contenir le module 110.

Le bord intérieur de l'ouverture 262 comprend une membrane souple annulaire 263 s'étendant sur toute la périphérie du bord intérieur de l'ouverture 262 et vers l'intérieur de l'ouverture 262. La membrane 263 est apte à se déformer au contact du module 110, pour définir une lèvre annulaire d'étanchéité 264 entre le masque 260 et le module 110.

La lèvre 264 assure l'étanchéité entre le module 110 et le masque 260 tout en permettant la mobilité du module 110 dans le boitier 101.

Un joint non représenté, par exemple de type joint torique, est disposé à l'interface entre le bord périphérique extérieur du masque 260 et l'intérieur du boitier 101.

La forme, les dimensions de la membrane 263, le choix du matériau et de son élasticité, sont déterminées pour que la pression exercée par la lèvre 264 sur le contour extérieur du module 110 assure l'étanchéité de l'intérieur du boitier 101 tout en permettant une liberté de mouvement du module 110 dans le boitier 101. La membrane 263 est réalisée par exemple à partir d'un caoutchouc éthylène-propylène-diène monomère (EPDM) avec un grade adapté à l'application. Ce matériau d'étanchéité haute performance résiste aux intempéries, à l'ozone et l'exposition aux UV (rayons ultra-violet).

Le masque 260 est monté dans le boitier 110 par l'ouverture 100 selon la direction X et la membrane 263 se déforme en rencontrant le contour extérieur du module qui traverse l'ouverture 262 du masque 260 pour définir la lèvre 264.

La membrane 263 vient par exemple de matière avec un joint d'étanchéité rapporté dans l'ouverture 262 de la partie rigide 261 du masque 260.

Elle peut être également réalisée à partir à partir d'un surmoulage de matière plastique sur le corps rigide 261 du masque 260 ou encore à partir d'un moulage bi-matière du masque 260.

## Revendications

1. Ensemble de projecteur de véhicule (V) comportant un boitier (101) comportant une ouverture (100), ledit boitier (101) comportant au moins un module d'éclairage (110) disposé à l'intérieur du boitier (101), ledit module d'éclairage (110) étant hermétiquement fermé par une lentille de projection (118) disposée en regard de l'ouverture (100), ledit ensemble de projecteur comportant un masque de fermeture (260) étanche fermant l'ouverture (100) entre le boitier (101) et le module d'éclairage (110), et comportant un corps rigide (261) dans lequel est ménagé une ouverture (262) traversée par le module (110) et une membrane souple annulaire (263) disposée à l'interface entre l'ouverture (262) et le module d'éclairage (110) ; ladite membrane (263) assurant l'étanchéité entre le module (110) et le masque (260) tout en permettant la mobilité du module (110) dans le boitier (101), ledit ensemble étant **caractérisé en ce que** la membrane (263) définit une lèvre annulaire d'étanchéité (264) obtenue par déformation élastique de la membrane (263) autour du module (110).

2. Ensemble de projecteur de véhicule (V) selon la revendication précédente, **caractérisé en ce que** la membrane (263) est une partie d'un joint d'étanchéité rapporté dans l'ouverture (262) du masque (260).

3. Ensemble de projecteur de véhicule selon la revendication 1, **caractérisé en ce que** la membrane (263) est réalisée à partir d'un surmoulage de matière plastique sur la partie rigide (261) du masque (260).

4. Ensemble de projecteur de véhicule selon la revendication 1, **caractérisé en ce que** la membrane (263) est réalisée à partir d'un moulage bi-matière du masque (260).

5. Ensemble de projecteur de véhicule selon l'une des revendications précédentes, **caractérisé en ce que** la forme, les dimensions de la membrane (263), le choix du matériau et de son élasticité, sont déterminées pour que la pression exercée par la membrane (263) sur le contour extérieur du module (110) assure l'étanchéité de l'intérieur du boitier (101) tout en permettant une liberté de mouvement du module (110) dans le boitier (101).

6. Véhicule (V) automobile comportant au moins un ensemble de projecteur selon l'une des revendications 1 à 5.

## Patentansprüche

1. Fahrzeugscheinwerfereinheit (V), die ein Gehäuse (101) umfasst, das eine Öffnung (100) umfasst, wobei das Gehäuse (101) mindestens ein Beleuchtungsmodul (110) umfasst, das in dem Inneren des Gehäuses (101) angeordnet ist, wobei das Beleuchtungsmodul (110) durch eine Projektionslinse (118), die gegenüber der Öffnung (100) angeordnet ist, hermetisch geschlossen ist, wobei die Scheinwerfereinheit eine dichte Verschlussmaske (260) umfasst, die die Öffnung (100) zwischen dem Gehäuse (101) und dem Beleuchtungsmodul (110) schließt, und einen starren Körper (261) umfasst, in dem eine Öffnung (262) eingerichtet ist, die von dem Modul (110) durchquert ist, und eine biegsame Ringmembran (263), die an der Schnittfläche zwischen der Öffnung (262) und dem Beleuchtungsmodul (110) angeordnet ist; wobei die Membran (263) die Abdichtung zwischen dem Modul (110) und der Maske (260) sicherstellt, während sie gleichzeitig die Beweglichkeit des Moduls (110) in dem Gehäuse (101) erlaubt, Einheit **dadurch gekennzeichnet, dass** die Membran (263) eine Abdichtungsringlippe (264) bildet, die durch elastisches Verformen der Membran (263) um das Modul (110) erhalten wird.

2. Fahrzeugscheinwerfereinheit (V) nach dem vorstehenden Anspruch, **dadurch gekennzeichnet, dass** die Membran (263) ein Teil einer Dichtung ist, die in der Öffnung (262) der Maske (260) angebaut ist.

3. Fahrzeugscheinwerfereinheit nach Anspruch 1, **dadurch gekennzeichnet, dass** die Membran (263) ausgehend von einem Kunststoffumspritzen auf dem starren Teil (261) der Maske (260) hergestellt ist.

4. Fahrzeugscheinwerfereinheit nach Anspruch 1, **dadurch gekennzeichnet, dass** die Membran (263) ausgehend von einem Zweikomponentenformen der Maske (260) hergestellt ist.

5. Fahrzeugscheinwerfereinheit nach einem der vorstehenden Ansprüche, **dadurch gekennzeichnet, dass** die Form, die Maße der Membran (263), die Auswahl des Materials und seiner Elastizität festgelegt sind, damit der Druck, der von der Membran (263) auf die Außenkontur des Moduls (110) ausgeübt wird, die Abdichtung des Inneren des Gehäuses (101) sicherstellt, während gleichzeitig eine Bewegungsfreiheit des Moduls (110) in dem Gehäuse (101) erlaubt wird.

6. Kraftfahrzeug (V), das mindestens eine Scheinwerfereinheit nach einem der Ansprüche 1 bis 5 umfasst.

## Claims

1. A headlight assembly of a vehicle (V) comprising a casing (101) comprising an opening (100), said casing (101) comprising at least one lighting module (110) disposed in the interior of the casing (101), said lighting module (110) being hermetically sealed by a projection lens (118) disposed opposite the opening (100), said headlight assembly comprising a sealed closure mask (260) closing the opening (100) between the casing (101) and the lighting module (110), and comprising a rigid body (261) in which an opening (262) is arranged which is passed through by the module (110), and an annular flexible membrane (263) disposed at the interface between the opening (262) and the lighting module (110); said membrane (263) ensuring the seal between the module (110) and the mask (260) whilst permitting the mobility of the module (110) in the casing (101), said assembly being **characterized in that** the membrane (263) defines an annular sealing lip (264) obtained by elastic deformation of the membrane (263) around the module (110) .

2. The headlight assembly of a vehicle (V) according to the preceding claim, **characterized in that** the membrane (263) is a part of a seal inserted in the opening (262) of the mask (260).

3. The headlight assembly of a vehicle according to Claim 1, **characterized in that** the membrane (263) is made from an overmoulding of plastic material on the rigid part (261) of the mask (260).

4. The headlight assembly of a vehicle according to Claim 1, **characterized in that** the membrane (263) is made from a bi-material moulding of the mask (260).

5. The headlight assembly of a vehicle according to one of the preceding claims, **characterized in that** the shape, the dimensions of the membrane (263), the choice of material and of its elasticity are determined so that the pressure exerted by the membrane (263) on the exterior contour of the module (110) ensures the sealing of the interior of the casing (101) whilst permitting a freedom of movement of the module (110) in the casing (101).

6. A motor vehicle (V) comprising at least one headlight assembly according to one of Claims 1 to 5.
